# EUROPÄISCHE PATENTSCHRIFT

(11) **EP 1 731 210 B1**
(45) Veröffentlichungstag und Bekanntmachung des Hinweises auf die Patenterteilung: **03.06.2009**
(21) Anmeldenummer: 05112147.3
(22) Anmeldetag: 14.12.2005
(51) Int. Cl.: B01D 29/96

(54) **Filtereinrichtung mit einem Filterelement**
Filter assembly with a filtering element
Dispositif de filtration avec un élément filtrant

(30) Priorität: 08.06.2005 DE 102005026292
(43) Veröffentlichungstag der Anmeldung: 13.12.2006
(60) Teilanmeldung: 09100154.5
(73) Patentinhaber: ROBERT BOSCH GMBH, 70442 Stuttgart (DE)
(72) Erfinder: Baz, Alfonso, 28290, Las Matas (ES); Parra Navarrete, Alberto, 28027, Madrid (ES)

(56) Entgegenhaltungen:
- US-A- 5 355 860
- US-A- 5 879 543
- US-B1- 6 245 701

## Beschreibung

### Stand der Technik

Die Erfindung betrifft eine Filtereinrichtung, insbesondere eine Kraftstofffiltereinrichtung für eine Brennkraftmaschine, mit einem Filtergehäuse, das durch einen Gehäusedeckel verschlossen ist und in dem ein Filterelement derart angeordnet ist, dass nach einem Lösen des Gehäusedeckels vom Filtergehäuse, das Filterelement weiterhin am Gehäusedeckel gehaltert ist.

Es sind Filtereinrichtungen bekannt, bei denen ein in einem Filtergehäuse angeordnetes Filterelement beim Abnehmen eines zugehörigen Gehäusedeckels aus dem Filtergehäuse mit entnommen werden kann. So ist in DE 196 02 082 A1 beispielsweise eine dort als Kraftstoffmodul bezeichnete Filtereinrichtung beschrieben, bei der in einem Filtergehäuse als Filterelement ein austauschbarer Filtersatz angeordnet ist. Der Filtersatz ist an einem seiner Stirnseiten mittels einer Formdichtung an dem Filtergehäuse abgedichtet und an der gegenüberliegenden Stirnseite mittels eines Rastelements derart am Deckel befestigt, dass die Formdichtung bei einem Abschrauben des Gehäusedeckels vom Filtergehäuse von einem zugehörigen Dichtsitz am Filtergehäuse abgezogen wird. Nachteilig ist bei dieser Konstruktion gemäß DE 196 02 082 A1 jedoch, dass die Rastelemente erstens ganz speziell gestaltet sein müssen, damit sich der Filtersatz beim Aufschrauben und Abschrauben des Deckels nicht mitdrehen muss und zweitens diese Rastelemente beim Abziehen und Aufschieben des Filtersatzes an dem zugehörigen Dichtsitz leicht beschädigt werden können. Da die Rastelemente zumindest teilweise aber auch an dem als Lebensdauerteil vorgesehenen Gehäusedeckel vorgesehen sein müssen, führt eine solche mögliche Beschädigung dieser Rastnasen dazu, dass beim Filterwechsel der Gehäusedeckel notgedrungen ebenfalls ausgetauscht werden muss.

Die US 6,245,701 B1 zeigt eine Containerstruktur mit einem äußeren Behälter, einem Behälterdeckel, einem Zulaufanschluss, einem Auslassanschluss und mit einem inneren Behälter mit mehreren Filterlagen. Der Zulaufanschluss und der Auslassanschluss befinden sich am Behälterdeckel. Der äußere Behälter und der Behälterdeckel sind über eine Gewindeverbindung miteinander verbunden. Ebenso sind der innere Behälter und der Behälterdeckel über eine Gewindeverbindung miteinander verbunden. Ähnliche Ausführungen zeigen auch die US 5,355,860 und die US 5,879,543.

### Aufgabe und Lösung der Erfindung

Es ist eine Aufgabe der Erfindung eine eingangs genannte Filtereinrichtung derart zu verbessern, dass die oben genannten Nachteile überwunden und insbesondere ein Wechsel des Filterelements mit geringem Aufwand und ohne eine Gefahr der Beschädigung von Bauteilen der Filtereinrichtung möglich ist.

Die Aufgabe ist erfindungsgemäß mit einer gattungsgemäßen Filtereinrichtung gelöst, bei der das Filterelement und das Filtergehäuse mit Schraubverbindungen befestigt sind.

Die erfindungsgemäße Lösung erscheint gegenüber einer zwischen dem Filterelement und dem Gehäusedeckel angeordneten Rastverbindung zunächst grundsätzlich eher nachteilig zu sein, weil sie erstens bei der Herstellung teuerer ist und zweitens eigentlich eine Schraubverbindung auch aufwendiger zu Montieren und zu Öffnen ist, als ein Rast- oder Clip-Verbindung. Die erfindungsgemäß vorgesehene Schraubverbindung zwischen Filterelement und Gehäusedeckel führt aber im Vergleich zu bekannten Rastverbindungen zu einer erheblich steiferen und bruchsichereren Verbindung der beteiligten Bauteile und schafft damit dort einen derart großen Vorteil, dass die sich gegebenenfalls ergebenden Kostennachteile überwunden werden können. Auch der Zusatzaufwand hinsichtlich der Montage ist bei der erfindungsgemäßen Filtereinrichtung vergleichsweise gering, insbesondere dann, wenn zumindest eine der nachfolgend noch erläuterten vorteilhaften Weiterbildungen der erfindungsgemäßen Lösungen berücksichtigt ist. Die Demontage des erfindungsgemäßen Filterelements, so hat sich gezeigt ist sogar besonders einfach, weil sich die erfindungsgemäße Schraubverbindung selbst nach langer Betriebszeit der Filtereinrichtung störungsfrei und ohne Gefahr von Beschädigung öffnen lässt.

Um über die Lebensdauer der erfindungsgemäßen Filtereinrichtung hinweg deren Dichtheit sicherstellen zu können, ist es von Vorteil, wenn der Gehäusedeckel an dem Filtergehäuse mit einer Schraubverbindung befestigt ist. Eine derartige Schraubverbindung bringt es aber mit sich, dass der Gehäusedeckel und damit auch das daran befestigte Filterelement beim Auf- und Abschrauben am Filtergehäuse gedreht werden. Da zugleich aber auch das Filterelement in dem Filtergehäuse an einem Dichtsitz aufgeschoben werden muss, ist eine Drehbewegung des Filterelements grundsätzlich von Nachteil. Durch den Reibwiderstand an dem genannten Dichtsitz kann es nämlich passieren, dass die Dichtwirkung negativ beeinflusst oder die Schraubverbindung zwischen Gehäusedeckel und Filterelement gelöst wird, nämlich gerade dann, wenn diese Schraubverbindung die gleiche Gewinderichtung (d.h. Links- oder Rechtsgewinde) aufweist, wie die Schraubverbindung zwischen Filtergehäuse und Gehäusedeckel. Um ein derartiges Lösen der Schraubverbindung zwischen Gehäusedeckel und Filterelement zu verhindern, kann vorteilhaft die Gewinderichtung der Schraubverbindung zwischen Gehäusedeckel und Filtergehäuse entgegengesetzt zu der Gewinderichtung der Schraubverbindung zwischen Filterelement und Gehäusedeckel gestaltet sein.

Eine derartige Ausführung bringt es aber mit sich, dass gegebenenfalls bei einem Aufschrauben des Gehäusedeckels auf das Filtergehäuse das Filterelement mit seiner Schraubverbindung zusätzlich in Richtung auf die festgeschraubte Lage bewegt und dadurch diese Schraubverbindung ungebührend fest angezogen wird. Solche Probleme treten hingegen bei der vorgeschlagenen Filtereinrichtung, nicht auf, bei der die Schraubverbindung zwischen Filterelement und Gehäusedeckel sowie die Schraubverbindung zwischen Gehäusedeckel und Filtergehäuse eine gemeinsame Drehachse aufweisen und in Richtung der gemeinsamen Drehachse die axiale Erstreckung der Schraubverbindung zwischen Filterelement und Gehäusedeckel länger gestaltet ist, als die axiale Erstreckung der Schraubverbindung zwischen Gehäusedeckel und Filtergehäuse. Bei einer derartigen Ausgestaltung kann dann nämlich das Gewinde der Schraubverbindung zwischen Gehäusedeckel und Filtergehäuse (zum Lösen bzw. Befestigen) jeweils mit gleicher Drehrichtung gestaltet sein, wie das Gewinde der Schraubverbindung zwischen Filterelement und Gehäusedeckel. Dies ist möglich, weil das Filterelement, das während des Auf- oder Abschraubens des Gehäusedeckels (aufgrund der Reibung am Dichtsitz zwischen Filtergehäuse und Filterelement) im Filtergehäuse gebremst ist und sich daher (und wegen der gleichen Gewinderichtung) nicht mit dem Gehäusedeckel mitdreht, sich nicht vollständig von der besonders lang gestalteten Schraubverbindung zwischen Filterelement und Gehäusedeckel ablösen kann. Im Falle eines Abschraubens des Gehäusedeckels vom Filtergehäuse bedeutet dies konkret, dass das Filterelement noch am Gehäusedeckel befestigt ist, wenn die Schraubverbindung zwischen Gehäusedeckel und Filtergehäuse bereits gelöst ist. Mit den derart gestalteten Schraubverbindungen ist also bewusst ein sich nicht mit dem Gehäusedeckel mitdrehendes Filterelement gestaltet.

Diese Lösung kann auch optimal an eine Abdichtung angepasst werden, welche für die ordnungsgemäße Funktion der Filtereinrichtung aus strömungstechnischen Gründen zwischen dem Filterelement und dem Filtergehäuse vorgesehen sein muss. Diese Abdichtung zwischen dem Filterelement und dem Filtergehäuse kann dabei, wie erwähnt besonders vorteilhaft als ein fluiddichter, insbesondere ein flüssigkeitsdichter Gleitsitz gestaltet sein.

Darüber hinaus ist es bei einer derartigen erfindungsgemäßen Lösung immer von Vorteil, wenn das Filterelement bzw. das Filtergehäuse an dem Gleitsitz in Bezug auf die Drehachse der Schraubverbindung zwischen Filterelement und Gehäusedeckel sowohl verschiebbar als auch verdrehbar gestaltet ist. Ein allein für ein Verschieben vorgesehener Gleitsitz, welcher gemäß den oben beschriebenen Weiterbildungen möglich ist, führt allerdings zu einer erhöhten Dichtsicherheit und auch zu besonders geringen Schraubkräften für das Montieren und Demontieren des Gehäusedeckels (zusammen mit dem Filterelement) am Filtergehäuse.

Um die Montage und auch den Austausch des erfindungsgemäßen Filterelements besonders einfach zu gestalten, ist es ferner von Vorteil, wenn das Filterelement zwei entgegen gesetzte Stirnseiten aufweist, von denen im eingebauten Zustand eine zum Gehäusedeckel und eine zum Filtergehäuse gerichtet ist, und an jeder dieser Stirnseiten ein Gewinde zum möglichen Verbinden mit dem Gehäusedeckel vorgesehen ist. Ein derart symmetrisch gestaltetes Filterelement kann bei der Montage besonders leicht automatisch zugeführt und auch verbaut werden, weil es nicht verkehrt herum eingebaut werden kann. Um diesen Vorteil auch hinsichtlich der Filtrationswirkung und der restlichen Konstruktion des Filterelements voll zur Geltung zu bringen, ist es besonders vorteilhaft, das Filterelement in Bezug auf die Mittelquerschnittsebene flächensymmetrisch zu gestalten. Ein hohe Filtrationsleistung bei besonders geringem Bauraum kann in Verbindung mit der erfindungsgemäß vorgesehenen Schraubverbindung ferner erzielt werden, wenn das Filterelement, sowie insbesondere auch das Filtergehäuse und/oder der Gehäusedeckel im Wesentlichen rotationssymmetrisch gestaltet sind.

Die oben genannten Vorteile kommen besonders in Verbindung mit einem als Kraftstofffilter oder als Harnstofffilter, insbesondere für Kraftfahrzeuge gestalteten Filterelement zur Geltung, weil bei diesen Filtern regelmäßig Filterwechsel erfolgen müssen.

### Kurzbeschreibung der Zeichnungen

Nachfolgend wird ein Ausführungsbeispiel einer erfindungsgemäßen Filtereinrichtung anhand der beigefügten schematischen Zeichnungen näher erläutert. Es zeigt:
- Fig. 1: eine Seitenansicht einer erfindungsgemäßen Filtereinrichtung,
- Fig. 2: den Schnitt II-II in Fig. 1,
- Fig. 3 bis Fig. 6: mehrere Schritte des Ausbaus eines sich zunächst in der Filtereinrichtung befindenden Filterelements und
- Fig. 7 bis Fig. 11: mehrere Schritte des Einbaus eines sich abschließend in der Filtereinrichtung befmdenden Filterelements.

### Detaillierte Beschreibung des Ausführungsbeispiels

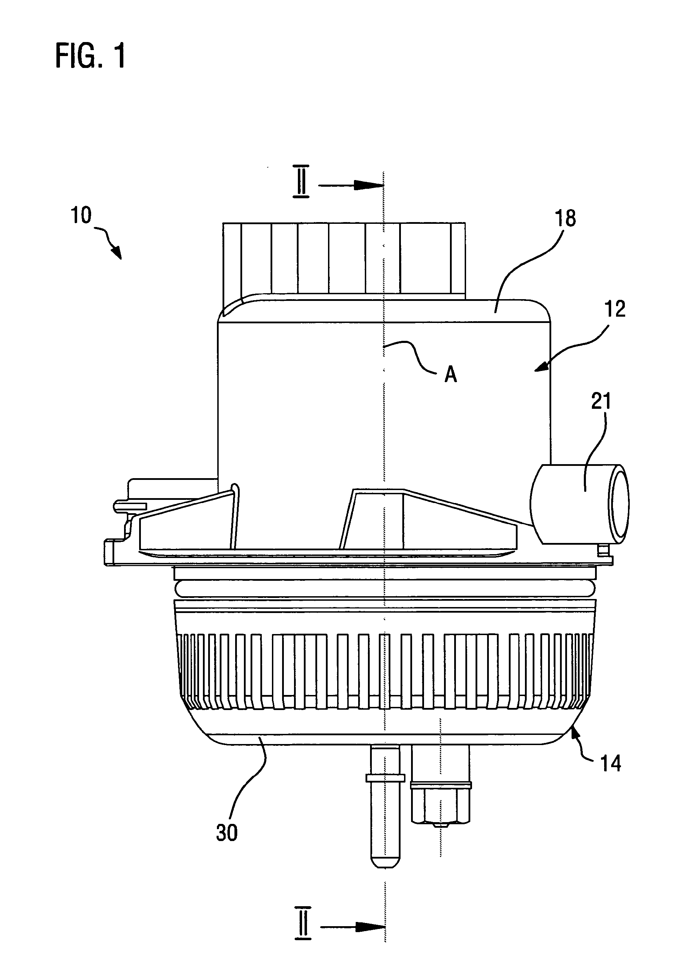

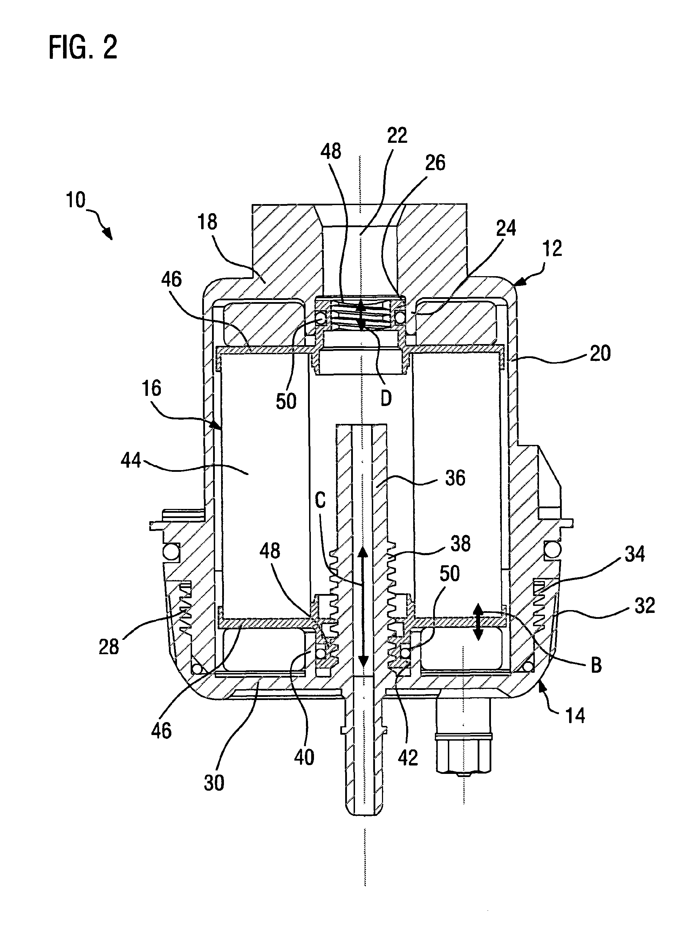

In Fig. 1 und Fig. 2 ist eine Filtereinrichtung 10 veranschaulicht, welche als grundlegende Elemente ein Filtergehäuse 12, einen zugehörigen Gehäusedeckel 14 und ein sich im Betrieb der Filtereinrichtung 10 in dem Filtergehäuse 12 befmdendes Filterelement 16 aufweist.

Das Filtergehäuse 12 ist in seiner Grundform als ein Becher gestaltet, der einen Gehäuseboden 18 und eine daran am Umfang anschließende Ringwand 20 umfasst. An der Außenseite der Ringwand 20 befmdet sich ein Anschluss 21 zum Einleiten eines zu filtrierenden Fluids, wie beispielsweise Kraftstoff oder Harnstoff. Die Ringwand 20 ist im Wesentlichen zylindrisch um eine Drehachse A gestaltet. Der Gehäuseboden 18 ist zentrisch von einer Durchgangsöffnung 22 durchsetzt, welche zum Einsetzen eines nicht dargestellten Drucksensors dient. In der Durchgangsöffnung ist an der zur Ringwand 20 gewandten Seite des Gehäusebodens 18 ein als kurzes Rohrstück gestalteter Dichtsitz 24 ausgebildet. Der Dichtsitz 24 weist an seiner Innenseite eine sich zylindrisch zur Drehachse A erstreckende Dichtfläche 26 auf. An dem vom Gehäuseboden 18 abgewandten Endbereich der Ringwand 20 ist diese mit einem Außengewinde 28 versehen, welches sich in Richtung der Drehachse A über eine Länge B der Ringwand 20 erstreckt.

Der Gehäusedeckel 14 ist im Wesentlichen scheibenförmig mit einer im Wesentlichen kreisförmigen Deckelfläche 30 gestaltet, wobei vom Rand dieser Deckelfläche 30 ein im Vergleich zur Ringwand 20 kurzer Wandabschnitt 32 absteht. An diesem Wandabschnitt 32 ist ein Innengewinde 34 ausgebildet, welches in Richtung der Drehachse A ebenfalls eine Erstreckung der Länge B aufweist. Im Zentrum der Deckelfläche 30 ist diese von einem hohlzylindrischen Dorn 36 durchsetzt, der außenseitig vom Gehäusedeckel 14 als ein Fluidauslaß für die Filtereinrichtung 10 ausgebildet ist. An der zum Filtergehäuse 12 gewandten Seite, welche also die Innenseite des Gehäusedeckels 14 darstellt, ist der Dorn 36 an einem an die Deckelfläche 30 anschließenden Abschnitt mit einem Außengewinde 38 gestaltet. Dieses Außengewinde 38 weist in Richtung der Drehachse A eine Länge C auf, welche etwa dem Zweifachen der Länge B entspricht. Der Dorn 36 ist ferner ein kurzes Stück von einem an die Deckelfläche 30 anschließenden hohlzylindrischen Dichtsitz 40 umgeben, an dessen Innenseite eine zylindrische Dichtfläche 42 ausgebildet ist.

Das Filterelement 16 umfasst im Wesentlichen ein hohlzylindrisch gestaltetes Filtergitter 44, an dessen beiden Stirnseiten jeweils ein Anschlussring 46 fluiddicht angesetzt ist. Im Zentrum jedes dieser Anschlussringe 46 ist ein hohlzylindrischer Abschnitt vorgesehen, dessen innenseitige Durchgangsöffnung mit einem Innengewinde 48 gestaltet ist. Dieses Innengewinde 48 weist in Richtung der Drehachse A eine Länge D auf, welche kleiner als die Länge B ist. Außenseitig ist jeder der hohlzylindrischen Abschnitte mit einem Dichtring 50 versehen, welcher ortsfest an dem zugehörigen hohlzylindrischen Abschnitt gehalten ist.

Bei montierter Filtereinrichtung 10, so wie sie in Fig. 1 und Fig. 2 dargestellt ist, ist das Innengewinde 48 des Filterelements 16 vollständig auf das Außengewinde 38 des Gehäusedeckels 14 aufgeschraubt und dadurch das Filterelement 16 am Gehäusedeckel 14 innenseitig ortsfest gehaltert. Ferner ist das Außengewinde 28 des Filtergehäuses 12 vollständig in das Innengewinde 34 des Gehäusebodens 18 eingeschraubt, wodurch das Filtergehäuse 12 mit dem darin aufgenommenen Filterelement 16 fluiddicht verschlossen ist.

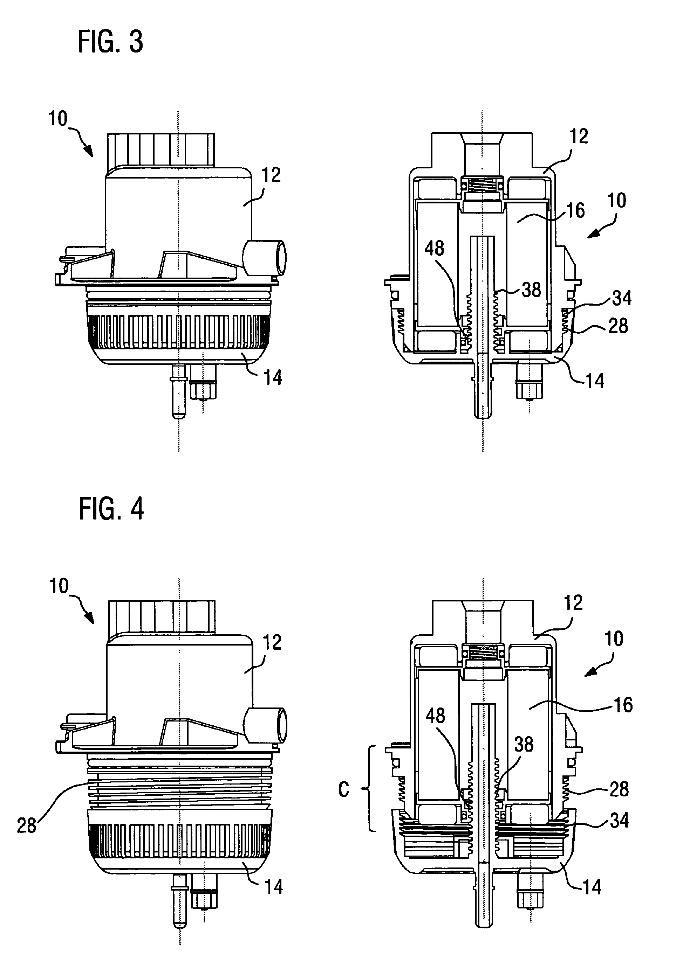

Nachfolgend wird anhand der Fig. 3 bis 11 erläutert, wie bei einer derart konstruierten Filtereinrichtung 10 das zugehörige Filterelement 16 ausgewechselt werden kann. Dabei zeigen die einzelnen Figuren jeweils links eine Seitenansicht des jeweiligen Montagezustandes, während auf der rechten Seite der Figuren jeweils ein Längsschnitt des entsprechenden Montagezustandes dargestellt ist.

Die Fig. 3 bis 6 stellen aufeinander folgend Schritte der Demontage des Filterelements 16 aus der Filtereinrichtung 10 dar. Dabei wird, ausgehend von dem in Fig. 3 dargestellten vollständig montierten Zustand, in Fig. 4 gezeigt, wie das Filtergehäuse 12 mit seinem Außengewinde 28 vom Gehäusedeckel 14 und dessen Innengewinde 34 abgeschraubt ist.

Bei diesem Abschrauben des Filtergehäuses 12 ist im Inneren des Filtergehäuses 12 zwischen dem Dichtsitz 26 und dem bezogen auf die Figuren oberen Dichtring 50 das Filterelement 16 einer Haftreibung unterworfen, wodurch das Filterelement 16 beim Abdrehen des Filtergehäuses 12 mit diesem mitgedreht wird. Dadurch wird auch das Innengewinde 48 des Filterelements 16 zumindest über die Länge B von dem Außengewinde 38 des Gehäusedeckels 14 bzw. dessen Dorn 36 geschraubt.

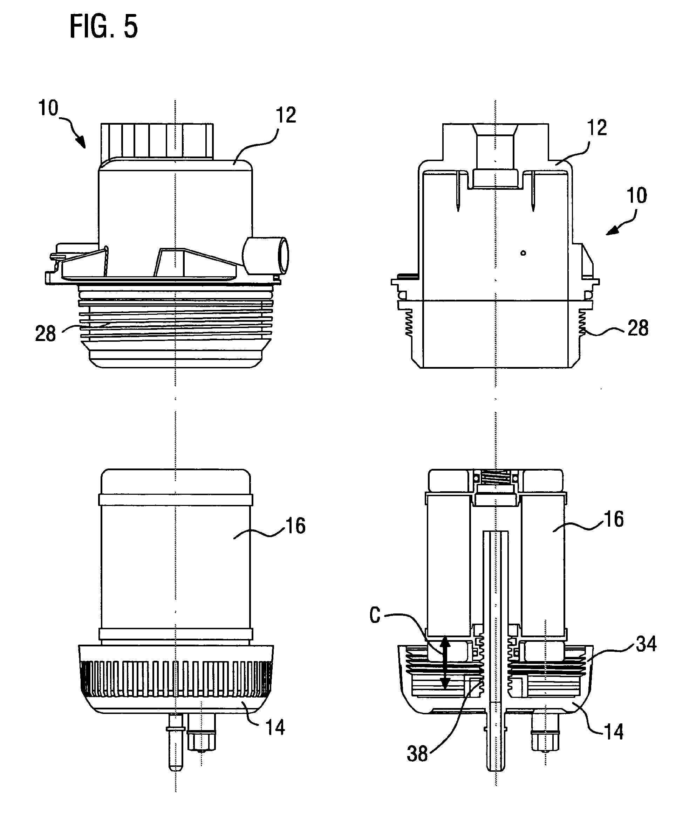

Das Außengewinde 38 ist mit seiner Länge C jedoch derart lang gestaltet, dass das Filterelement 16 auch nach diesem Schraubvorgang weiterhin an dem Dorn 36 gehaltert ist. Das Filtergehäuse 12 wird dann, wie in Fig. 5 dargestellt, von dem Filterelement 16 abgezogen.

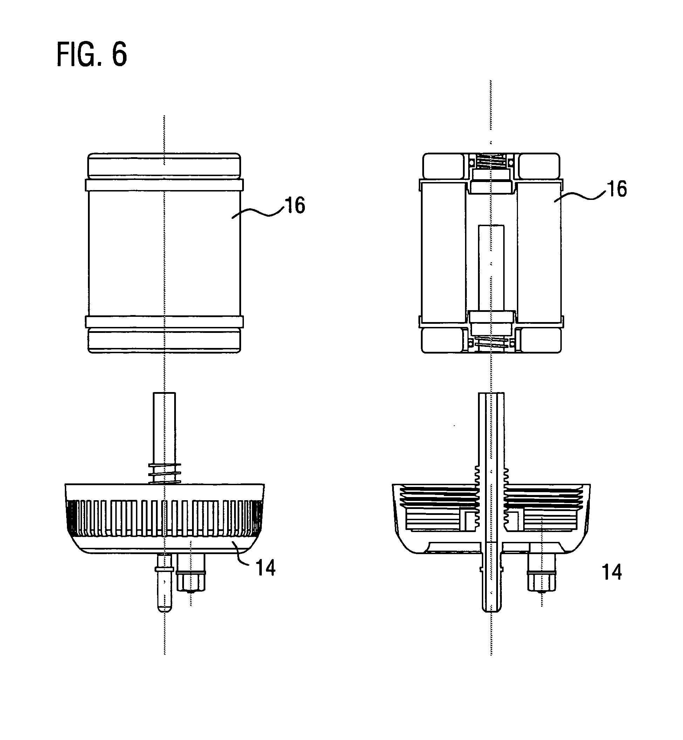

Nach dem Entfernen des Filtergehäuses 12 kann, wie in Fig. 6 dargstellt, das auszutauschende Filterelement 16 mit seinem Innengewinde 48 vollständig vom Außengewinde 38 abgeschraubt und dann von diesem entfernt werden.

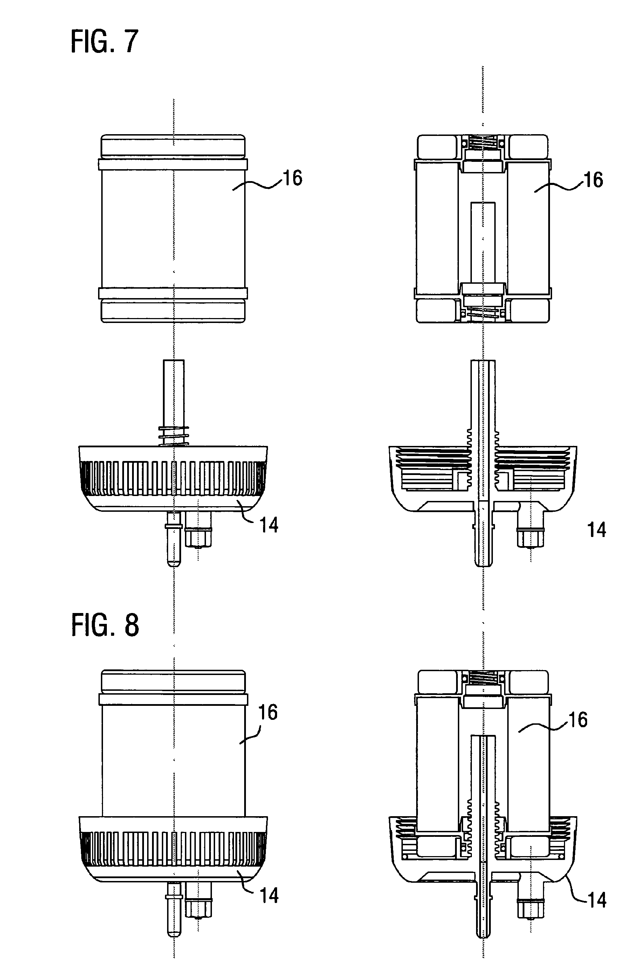

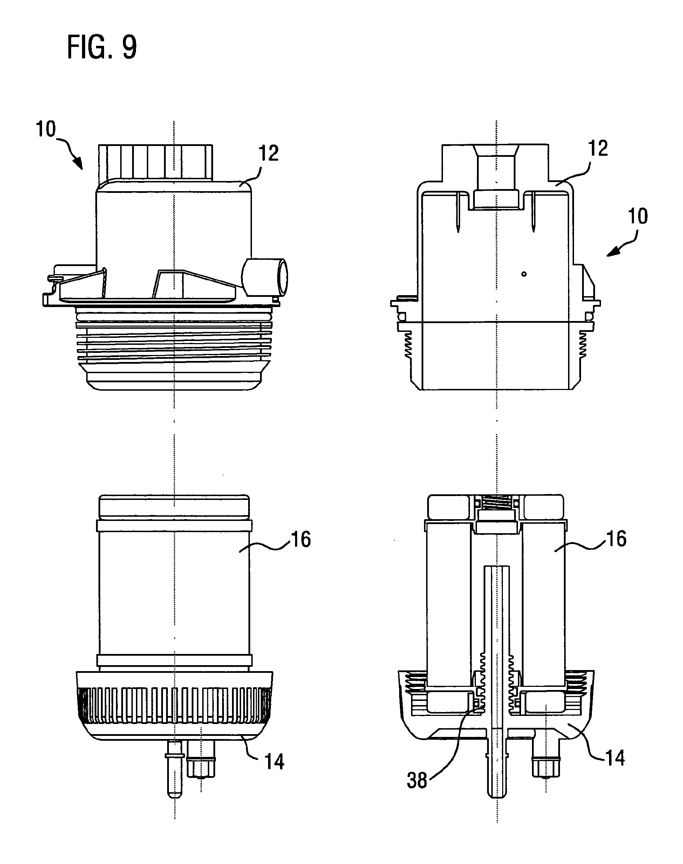

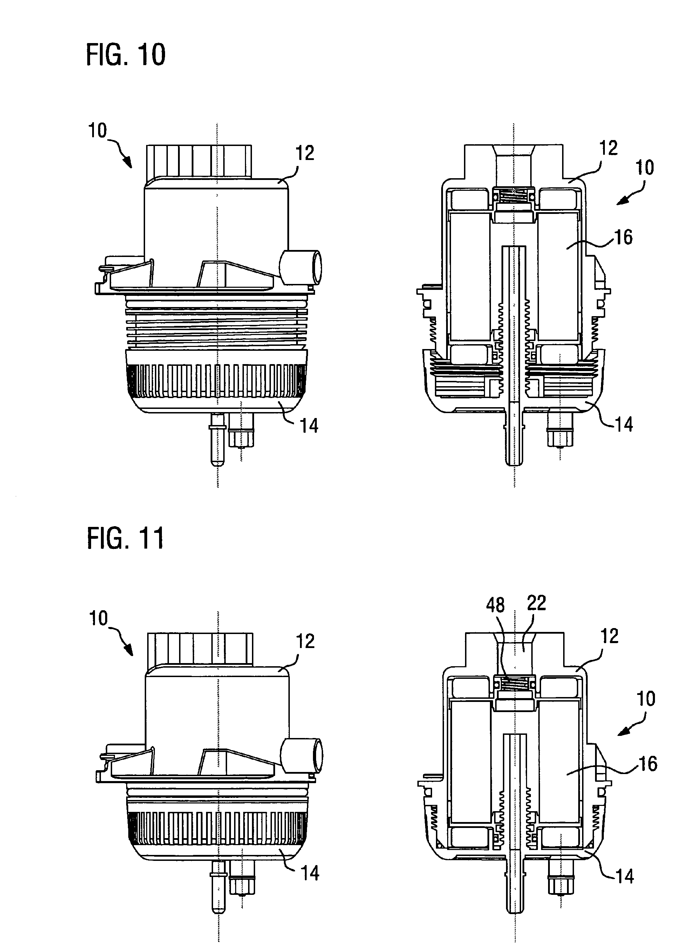

Die Fig. 7 bis 11 zeigen den Einbau eines neuen Filterelements 16 in die abschließend wieder vollständig montierte Filtereinrichtung 10. Bei dieser Montage wird zunächst gemäß Fig. 7 das Filterelement 16 mit einem seiner Innengewinde 48 auf das Außengewinde 38 des Gehäusedeckels 14 aufgeschraubt. Dabei kann das Innengewinde 48 vollständig bzw. so weit wie möglich aufgeschraubt werden (wie in Fig. 8, rechts dargestellt). Alternativ genügt auch ein teilweises Aufschrauben (wie in Fig. 9, rechts veranschaulicht). Mit dem nachfolgend Einschrauben (siehe Fig. 10) des Außengewinde 28 des Filtergehäuses 12 in das Innengewinde 34 des Gehäusedeckels 14 wird nämlich das Filterelement 16 mit seinem oberen Dichtring 50 aufgrund von Haftreibung oder zumindest Gleitreibung von dem Dichtsitz 24 mitgedreht und spätestens dadurch vollständig auf den Dorn 36 aufgeschraubt. Man erhält also auf besonders einfach herzustellende Weise den vollständig monierten Zustand, wie er in Fig. 11 veranschaulicht ist.

Abschießend sei angemerkt, dass die Durchgangsöffnung 22 im Gehäuseboden 18 derart groß gestaltet ist, dass bei dem in Fig. 11 dargestellten montierten Zustand durch die Durchgangsöffnung 22 hindurch in das dieser Öffnung gegenüberliegende Innengewinde 48 des Filterelements 16 ein Bauelement eingeschraubt werden kann. Durch dieses Einschrauben kann (insbesondere auch unabhängig von den die oben beschriebene Erfindung charakterisierenden Merkmalen des Anspruchs 1) in vorteilhafter Weise ein Bauelement an der Filtereinrichtung 10 befestigt werden. Ein solches Bauelement kann insbesondere vorteilhaft ein Drucksensor sein.

### Bezugszeichenliste

- 10: Filtereinrichtung
- 12: Filtergehäuse
- 14: Gehäusedeckel
- 16: Filterelement
- 18: Gehäuseboden
- 20: Ringwand
- 21: Anschluss
- 22: Durchgangsöffnung
- 24: Dichtsitz
- 26: Dichtfläche
- 28: Außengewinde
- 30: Deckelfläche
- 32: Wandabschnitt
- 34: Innengewinde
- 36: Dorn
- 38: Außengewinde
- 40: Dichtsitz
- 42: Dichtfläche
- 44: Filtergitter
- 46: Anschlussring
- 48: Innengewinde
- 50: Dichtring

## Patentansprüche

1. Filtereinrichtung (10), insbesondere Kraftstofffiltereinrichtung für eine Brennkraftmaschine, mit einem Filtergehäuse (12), das durch einen Gehäusedeckel (14) verschlossen ist und in dem ein Filterelement (16) derart angeordnet ist, dass nach einem Lösen des Gehäusedeckels (14) vom Filtergehäuse (12), das Filterelement (16) weiterhin am Gehäusedeckel (14) mit einer Schraubverbindung (38, 48) gehaltert ist und der Gehäusedeckel (14) an dem Filtergehäuse (12) mit einer Schraubverbindung (28, 34) befestigt ist, wobei die Schraubverbindung (38, 48) zwischen Filterelement (16) und Gehäusedeckel (14) sowie die Schraubverbindung (28, 34) zwischen Gehäusedeckel (14) und Filtergehäuse (12) eine gemeinsame Drehachse (A) aufweisen, **dadurch gekennzeichnet, dass** in Richtung dieser Drehachse (A) die axiale Erstreckung (C) der Schraubverbindung (38, 48) zwischen Filterelement (16) und Gehäusedeckel (14) länger gestaltet ist, als die axiale Erstreckung (B) der Schraubverbindung (28, 34) zwischen Gehäusedeckel (14) und Filtergehäuse (12).

2. Filtereinrichtung nach Anspruch 1,
**dadurch gekennzeichnet, dass** zwischen dem Filterelement (16) und dem Filtergehäuse (12) ein fluiddichter, insbesondere flüssigkeitsdichter Gleitsitz (26, 50) gestaltet ist.

3. Filtereinrichtung nach Anspruch 2,
**dadurch gekennzeichnet, dass** das Filterelement (16) bzw. das Filtergehäuse (12) an dem Gleitsitz (26, 50) in Bezug auf die Drehachse (A) der Schraubverbindung (38, 48) zwischen Filterelement (16) und Gehäusedeckel (14) verschiebbar und/oder verdrehbar gestaltet ist.

4. Filtereinrichtung nach einem der Ansprüche 1 bis 3,
**dadurch gekennzeichnet, dass** das Filterelement (16) zwei entgegen gesetzte Stirnseiten aufweist, von denen im eingebauten Zustand eine zum Gehäusedeckel (14) und eine zum Filtergehäuse (12) gerichtet ist, und an jeder dieser Stirnseiten ein Gewinde (48) zum möglichen Verbinden mit dem Gehäusedeckel (14) vorgesehen ist.

5. Filtereinrichtung nach einem der Ansprüche 1 bis 4,
**dadurch gekennzeichnet, dass** das Filterelement (16) als Kraftstofffilter gestaltet ist.

6. Filtereinrichtung nach einem der Ansprüche 1 bis 4,
**dadurch gekennzeichnet, dass** das Filterelement (16) als Harnstofffilter gestaltet ist.

## Claims

1. Filter device (10), in particular fuel filter device for an internal combustion engine, with a filter housing (12) which is closed by means of a housing cover (14) and in which a filter element (16) is arranged in such a way that, after a release of the housing cover (14) from the filter housing (12), the filter element (16) continues to be held on the housing cover (14) by means of a screw connection (38, 48), and the housing cover (14) is fastened to the filter housing (12) by means of a screw connection (28, 34), the screw connection (38, 48) between the filter element (16) and housing cover (14) and the screw connection (28, 34) between the housing cover (14) and filter housing (12) having a common axis of rotation (A), **characterized in that**, in the direction of this axis of rotation (A), the axial extent (C) of the screw connection (38, 48) between the filter element (16) and the housing cover (14) is configured longer than the axial extent (B) of the screw connection (28, 34) between the housing cover (14) and filter housing (12).

2. Filter device according to Claim 1, **characterized in that** a fluid-tight, in particular liquid-tight sliding fit (26, 50) is configured between the filter element (16) and the filter housing (12).

3. Filter device according to Claim 2, **characterized in that** the filter element (16) or the filter housing (12) is configured so as to be displaceable and/or rotatable at the sliding fit (26, 50) with respect to the axis of rotation (A) of the screw connection (38, 48) between the filter element (16) and the housing cover (14).

4. Filter device according to one of Claims 1 to 3, **characterized in that** the filter element (16) has two opposite end faces, of which one is directed towards the housing cover (14) and one towards the filter housing (12) in the installed state, and a thread (48) for possible connection to the housing cover (14) is provided on each of these end faces.

5. Filter device according to one of Claims 1 to 4, **characterized in that** the filter element (16) is configured as a fuel filter.

6. Filter device according to one of Claims 1 to 4, **characterized in that** the filter element (16) is configured as a urea filter.

## Revendications

1. Dispositif de filtration (10), en particulier dispositif de filtration de carburant pour un moteur à combustion interne, comprenant un boîtier de filtre (12) qui est fermé par un couvercle de boîtier (14) et dans lequel est disposé un élément de filtre (16) de telle sorte qu'après un desserrage du couvercle de boîtier (14) du boîtier de filtre (12), l'élément de filtre (16) soit retenu à nouveau sur le couvercle du boîtier (14) par une connexion vissée (38, 48) et le couvercle de boîtier (14) soit fixé sur le boîtier de filtre (12) avec une connexion vissée (28, 34), la connexion vissée (38, 48) entre l'élément de filtre (16) et le couvercle de boîtier (14) ainsi que la connexion vissée (28, 34) entre le couvercle de boîtier (14) et le boîtier de filtre (12) présentant un axe de rotation commun (A), **caractérisé en ce que** dans la direction de cet axe de rotation (A), l'étendue axiale (C) de la connexion vissée (38, 48) entre l'élément de filtre (16) et le couvercle de boîtier (14) soit configurée de manière plus longue que l'étendue axiale (B) de la connexion vissée (28, 34) entre le couvercle de boîtier (14) et le boîtier de filtre (12).

2. Dispositif de filtration selon la revendication 1, **caractérisé en ce qu'**un siège glissant (26, 50) étanche aux fluides, en particulier étanche aux liquides, est réalisé entre l'élément de filtre (16) et le boîtier de filtre (12).

3. Dispositif de filtration selon la revendication 2, **caractérisé en ce que** l'élément de filtre (16) ou le boîtier de filtre (12) est réalisé de manière déplaçable et/ou rotative sur le siège glissant (26, 50) par rapport à l'axe de rotation (A) de la connexion vissée (38, 48) entre l'élément de filtre (16) et le couvercle de boîtier (14).

4. Dispositif de filtration selon l'une quelconque des revendications 1 à 3, **caractérisé en ce que** l'élément de filtre (16) présente deux côtés frontaux opposés dont un, dans l'état monté, est orienté vers le couvercle de boîtier (14) et l'autre vers le boîtier de filtre (12), et sur chacun de ces côtés frontaux est prévu un filetage (48) pour la connexion possible au couvercle de boîtier (14).

5. Dispositif de filtration selon l'une quelconque des revendications 1 à 4,
**caractérisé en ce que** l'élément de filtre (16) est réalisé sous forme de filtre à carburant.

6. Dispositif de filtration selon l'une quelconque des revendications 1 à 4,
**caractérisé en ce que** l'élément de filtre (16) est réalisé sous forme de filtre à urée.
